# EUROPEAN PATENT SPECIFICATION

(11) **EP 1 069 311 B1**
(45) Date of publication and mention of the grant of the patent: **16.04.2003**
(21) Application number: 00113786.8
(22) Date of filing: 29.06.2000
(51) Int. Cl.: F02N 11/08

(54) **Intelligent automatic engine stop and restart system for land vehicles**
Intelligente automatische Start-Stopvorrichtung für Landkraftfahrzeuge
Dispositif d'arrêt et de redémarrage automatique intelligent pour véhicules routiers

(30) Priority: 12.07.1999 JP 19719499
(43) Date of publication of application: 17.01.2001
(73) Proprietor: NISSAN MOTOR COMPANY, LIMITED, Yokohama-shi, Kanagawa 221-0023 (JP)
(72) Inventor: Uchida, Masaaki, Yokosuka-shi, Kanagawa 237-0066 (JP); Nakajima, Yuki, Yokohama-shi, Kanagawa 236-0057 (JP)
(74) Representative: Hager, Thomas J., Dipl.-Ing. (FH)

(56) References cited:
- DE-A- 19 600 734
- PATENT ABSTRACTS OF JAPAN vol. 1997, no. 06, 30 June 1997 (1997-06-30) & JP 09 042003 A (HINO MOTORS LTD), 10 February 1997 (1997-02-10)
- PATENT ABSTRACTS OF JAPAN vol. 1997, no. 03, 31 March 1997 (1997-03-31) & JP 08 291725 A (HINO MOTORS LTD), 5 November 1996 (1996-11-05)
- PATENT ABSTRACTS OF JAPAN vol. 1997, no. 10, 31 October 1997 (1997-10-31) & JP 09 144587 A (DENSO CORP), 3 June 1997 (1997-06-03)

## Description

### FIELD OF THE INVENTION

The present invention relates to an intelligent automatic engine stop and restart system for land vehicles.

### BACKGROUND OF THE INVENTION

JP-A 8-291725 discloses an automatic engine stop and restart system for a land vehicle having a drivetrain including an internal combustion engine, a torque converter and an automatic transmission. According to this known system, when a driver depresses a brake pedal and places a manual select lever at neutral position after the vehicle has come to a halt, a controller stops operation of the engine. Subsequently, if the driver places the select lever at drive position with the brake pedal being depressed, the controller restarts the engine.

JP-A 9-4200 which is considered to represent the closest prior art, discloses an automatic engine stop and restart system, according to the preamble of claim 1 and teaches a technique to prohibit automatic engine stop when the temperature of an engine driven supercharger is higher than a predetermined value. It also teaches a software technique to determine the supercharger temperature without relying on any hardware configuration to detect the temperature.

The automatic engine stop and restart systems that have been proposed are satisfactory to some extent. However, a need remains to further improve such systems to solve a potential problem that an internal combustion engine might suffer from engine overheat when an engine coolant pump driven by the engine ceases its operation immediately after a vehicle has travelled at high speeds.

An object of the present invention is to provide an automatic engine stop and restart system that has solved the above-mentioned potential problem.

### SUMMARY OF THE INVENTION

According to a preferred implementation of the present invention, there is provided an automatic engine stop and restart system for a vehicle having an engine having an engine coolant pump driven by the engine, comprising:
sensors generating signals; and
a controller responsive to said signals for controlling an automatic engine stop and restart when the vehicle has come to a halt,
said controller being operative to determine whether or not the vehicle has come to a halt after travelling at high speeds and to prohibit automatic engine stop of the engine upon determination that the vehicle has come to a halt after travelling at high speeds.

This object is solved by the features of the claim 1. The dependent claims contain preferred embodiments of the invention.

According to a further preferred implementation of the present invention, there is provided an automatic engine stop and restart system for a vehicle having an engine having an engine coolant pump driven by the engine, comprising:
sensors generating signals; and
a controller responsive to said signals for controlling an automatic engine stop and restart when the vehicle has come to a halt,
said controller being operative to determine whether or not the vehicle is on a highway,
said controller being operative to prohibit automatic engine stop of the engine when the vehicle has come to a halt upon determination that the vehicle is on the highway.

The controller of the automatic engine stop and restart system determines whether or not the vehicle has just left a highway and prohibits automatic engine stop of the engine when the vehicle has come to a halt upon determination that the vehicle has left the highway.

### BRIEF DESCRIPTION OF THE DRAWINGS

Figure 1 is a schematic view of a vehicle drivetrain employing an intelligent automatic stop and restart control system implementing the present invention.

Figure 2 shows various hardware configurations of a vehicle navigation system in combination with the intelligent automatic stop and restart control system.

Figure 3 is a flow chart of a control routine implementing the present invention.

Figure 4 is a flow chart of a control routine illustrating the first preferred implementation.

Figure 5 is a flow chart of a control routine illustrating the second preferred implementation.

Figure 6 is a flow chart of a control routine illustrating the second preferred implementation.

### DESCRIPTION OF THE PREFERRED EMBODIMENTS

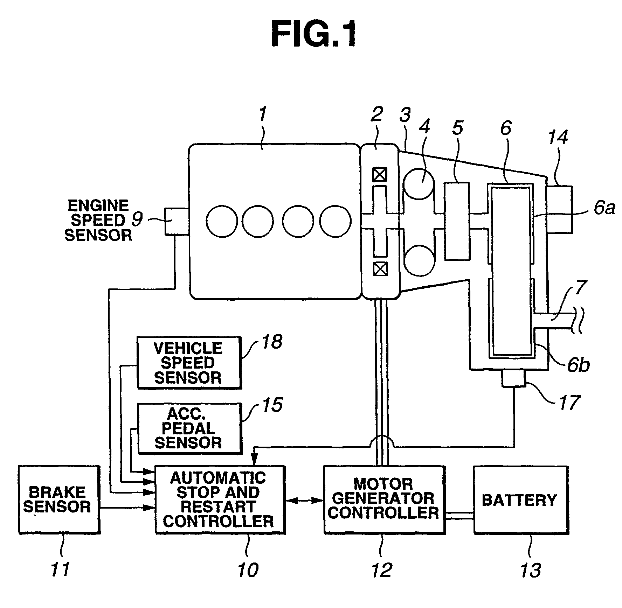

In Figure 1, a drivetrain for an automobile includes an internal combustion engine 1 and a continuously variable transmission (CVT) 3. The reference numeral 2 designates a motor generator. In this illustrated example, the motor generator 2 is disposed between the engine 1 and the CVT 3. In this drivetrain, the engine 1 or the motor generator 2 produces drive fed to the CVT 3. The CVT 3 transmits the drive to a drive shaft 7, which in turn drives the vehicle road wheels, not shown.

The drivetrain is not limited to the illustrated example shown in Figure 1. For example, the engine 1 may be any heat engine such as a gasoline engine and a Diesel engine. The CVT 3 is only an example of a transmission that can be used in the drivetrain. For example, an ordinary automatic transmission that has plural discrete gear ratios and a torque converter may replace the CVT 3. The CVT 3 shown in Figure 1 is of the so-called belt type. Other types of CVT including a CVT of the so-called conical cone type may be used.

The CVT 3, in this example, has a torque converter 4, a forward and reverse changeover gearing unit 5, and a pulley unit that includes a belt 6 extending between a driver pulley 6a and a follower pulley 6b. As a source of hydraulic fluid, an oil pump 14 is provided. The engine 1 does not drive this oil pump 14. Instead, the oil pump 14 includes an electric motor that is supplied with electric current always or when need arises. As is well known, a pulley ratio between speed of the driver pulley 6a and speed of the follower pulley 6b is variable. Varying the pulley ratio alters a CVT ratio, that is, a speed ratio between CVT input shaft speed and CVT output shaft speed. A transmission controller, not shown, determines a target value of an operating parameter indicative CVT ratio against varying travelling states of a vehicle. The transmission controller can adjust primary pressure and secondary pressure applied to the driver and follower pulleys 6a and 6b, respectively, to vary CVT ratio in such a direction as to reduce a deviation of current value of the operating parameter from the target value. The motor driven oil pump 14 provides hydraulic pressure needed by the CVT 3.

The forward reverse gearing unit 5 provides a switch between forward travel and reverse travel. The torque converter 4 provides torque multiplication between its pump side and turbine side.

The motor generator 2 has a rotor that is coupled directly or via a belt or a chain drive to a crankshaft of the engine 1. A motor generator controller 12 is provided to render the motor generator 2 operable as a motor or as a generator. It also controls speed of the motor generator 2 and torque or electric power.

The motor generator 2 operates as a motor when more power is needed or when the engine 1 is to be started. The motor generator controller 12 controls supply of electric current from a battery 13 to the motor generator 2 to operate the motor generator 2 as a motor. When the motor generator 2 is to operate as a generator in regenerative mode, the motor generator controller 12 charges the battery 13 with electric current from the motor generator 2.

An automatic stop and restart controller 10 is provided. This controller 10 controls automatic stop and the subsequent automatic restart of the engine upon a predetermined condition being met after the vehicle has come to a temporary stop.

Sensors are provided for the automatic stop and restart controller 10 to input information necessary to determine appropriate timings to stop and restart the engine. The sensors include an engine speed sensor 9, a brake sensor 11, an accelerator pedal (or gas pedal) sensor 15, a shift position sensor 17 and a vehicle speed sensor 18. The vehicle speed sensor 18 detects a parameter indicative of a travelling speed of the vehicle and generates a vehicle speed signal indicative of the travelling speed. The CVT 3 has plural drive positions, i.e., Park, Reverse, Neutral and Drive. The shift position sensor 17 is in the form of an inhibitor switch of the CVT 3 and generates a drive position indicative of a current drive position. The accelerator pedal sensor 15 detects depression degree of an accelerator pedal and generates a depression degree signal indicative of the detected depression degree. The brake sensor 15 detects as to whether or not a brake pedal is depressed and generates a brake signal. The engine speed sensor 9 detects a parameter indicative of revolution speed of the engine 1 and generates an engine speed signal indicative of the engine speed. The sensor signals are fed to the automatic stop and restart controller 10.

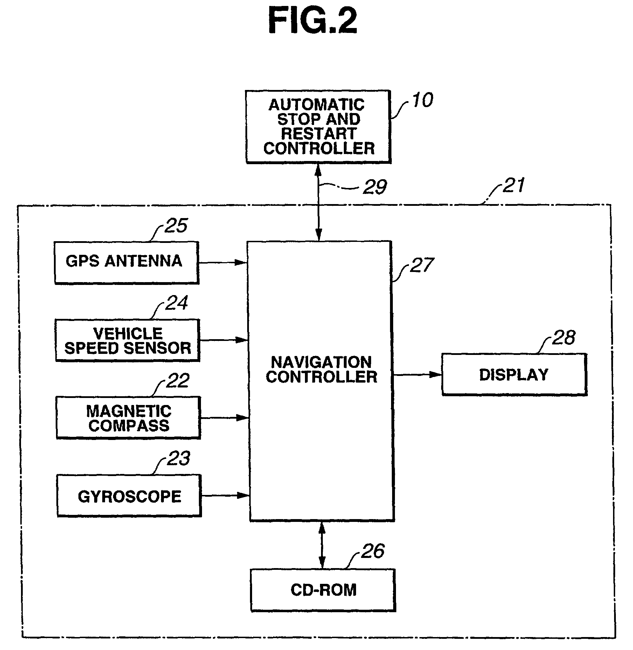

The vehicle has a navigation system 21. Referring to Figure 2, the vehicle navigation system 21 includes a magnetic compass 22 as a vehicle orientation sensor, a gyroscope 23 to measure an angular rate, a vehicle speed sensor 24 that may or may not be identical with the vehicle speed sensor 18, a GPS (Global Positioning System) antenna 25, a map database 26 stored in CD-ROM, a navigation control unit 27 and a user interface that includes a display 28. The navigation control unit 27 inputs information from the sensors and determines a vehicle current position. The determined vehicle current position and heading are indicated on a map within the display 28.

In accordance with the present implementation of the present invention, the navigation system 21 is put into operation by turning on engine ignition key, not shown, and it keeps on operating until the engine ignition key is subsequently turned off. The vehicle navigation system 21 keeps on calculating a vehicle current position for use in the automatic stop and restart controller 10. A communication line 29 interconnects the navigation system 21 and the automatic stop and restart controller 10. Through the communication line 29, the automatic stop and restart controller 10 can access into the navigation system 21 to input information on the vehicle current position.

In order to prevent overheat of the engine, the automatic stop and restart controller 10 prohibits the engine automatic stop when the vehicle comes to a halt while travelling on a highway or when the vehicle comes to a halt immediately after leaving a highway. The automatic stop and restart controller 10 relies on the vehicle current position and has logic to determine whether or not the vehicle is on a highway. This logic is also used to determine whether or not the vehicle has just left a highway.

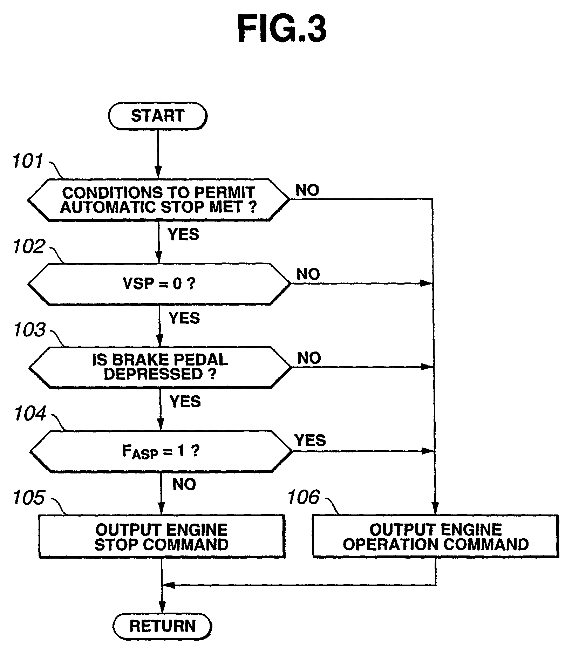

The flow chart of Figure 3 illustrates an automatic stop and restart control routine implementing the invention. The automatic stop and restart controller 10 execute this control routine at regular intervals, for example, 10 milliseconds. The controller 10 includes in the usual manner an input/output (I/O) interface, a read only memory (ROM), a random access memory (RAM) and a central processor unit (CPU). A data bus interconnects these components. The ROM stores control programs prepared along the flow chart of Figure 3.

In Figure 3, at step 101, the CPU of the controller 10 determines whether or not predetermined conditions to permit automatic engine stop, i.e., idle stop, are met.

The predetermined conditions include, for example,
① State of charge (SOC) of a battery falls in a predetermined range,
② Engine coolant temperature falls in a predetermined engine.

If, at step 101, the CPU determines that both of the above two conditions are met, the control routine proceeds to step 102. At step 102, the CPU determines whether or not vehicle speed VSP is zero (= 0 km/h). If this is the case, the control routine proceeds to step 103. At step 103, the CPU determines whether or not brake pedal is depressed by checking on the brake signal from the brake pedal sensor 11. If this is the case, the control routine proceeds to step 104.

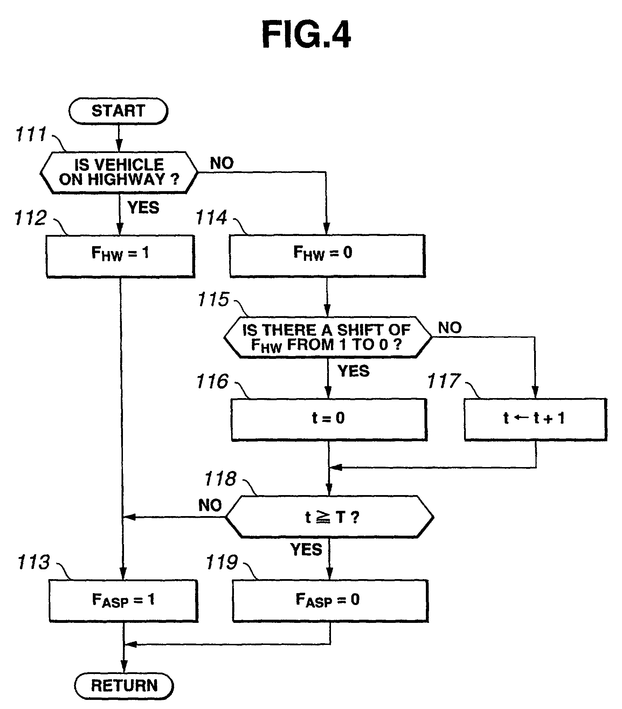

At step 104, the CPU determines whether an automatic stop prohibit flag F_{ASP} is set (= 1) or reset (= 0). As will be later described along the flow chart of Figure 4, the flag F_{ASP} is set when the CPU determines that a vehicle is on a highway or the vehicle has just left a highway. That is, when the flag F_{ASP} = 1, the routine proceeds to step 106 to prohibit automatic engine stop. At step 106, the CPU outputs an engine operation command to permit operation of the engine 1.

If, at step 104, the flag F_{ASP} = 0, the routine proceeds to step 105 to carry out automatic engine stop. At step 105, the CPU outputs an engine stop command.

If, at step 101, all of the predetermined conditions are not met, the routine proceeds to step 106. If, at step 102, the vehicle speed VSP is not zero, the routine proceeds to step 106. If, at step 102, the brake pedal is not depressed, the routine proceeds to step 106. At step 106, the CPU outputs engine operation command.

The flow chart of Figure 4 illustrates a control routine implementing the present invention. The CPU executes this control routine at regular intervals, for example, 10 milliseconds. The control routine includes a logic to determine whether or not a vehicle is on a highway and a logic whether or not the vehicle has just left a highway.

At step 111, the CPU inputs information on vehicle current position within a map from the navigation control unit 27 and determines whether or not a vehicle is on a highway. If this is the case, as continuous operation of an engine coolant pump is required, the routine proceeds to step 112 and then to step 113. At step 112, the CPU sets a highway flag F_{HW} (F_{HW} = 1). At step 113, the CPU sets the automatic stop prohibit flag F_{ASP} (F_{ASP} = 1). Both of the flags F_{HW} and F_{ASP} are initially reset and thus equal to zero, respectively.

If, at step 111, the CPU determines that the vehicle is not on a highway, the routine proceeds to step 114. At step 114, the CPU resets the highway flag F_{HW}. Immediately after the moment when there is a shift of the flag F_{HW} from 1 to 0, the CPU starts measuring time elapsed (steps 115 to 117). This moment represents when a vehicle has just left a highway. At step 115, the CPU determines whether or not there is a shift of the flag F_{HW} from 1 to 0 by comparing the current 0 level of the flag F_{HW} with the previous level thereof. If this is the case, the routine proceeds to step 116. At step 116, the CPU sets a timer t ready for action (t = 0). If, at step 114, the current 0 level of the flag F_{HW} is equal to the previous level thereof, the routine proceeds to step 117. At step 117, the CPU performs increment of the timer t by one.

After step 116 or 117, the routine proceeds to step 118. At step 118, the CPU determines whether or not the timer t is greater than a predetermined value T. The predetermined value T represents a period of time on which a decision is made whether or not operation of engine coolant pump is still needed when the engine is to be stopped. In this example, the predetermined value represents 1 minute. If, at step 118, t < T, this is the case where operation of the engine coolant pump is needed so that the routine proceeds to step 113. At step 113, the CPU sets the automatic stop prohibit flag F_{ASP} (F_{ASP} = 1).

If, at step 118, t ≧ T, this is the case where operation of engine coolant pump is no longer needed because engine will not be overheated when it is stopped. The routine proceeds to step 119 where the CPU resets the automatic stop prohibit flag F_{ASP} (F_{ASP} = 0).

The preceding description clearly indicates that the automatic stop prohibit flag F_{ASP} allows engine to keep on idling when vehicle comes to a halt on a highway due to traffic jam or at a toll gate. The flag F_{ASP} defines cases or situations where engine should idle when the vehicle comes to a halt so as to cause engine coolant pump to circulate engine coolant. In this manner, occurrence of engine-overheat is prevented.

The preferred implementation has used information generated by the navigation system, thus making it easy to prohibit automatic engine stop while vehicle is on a highway.

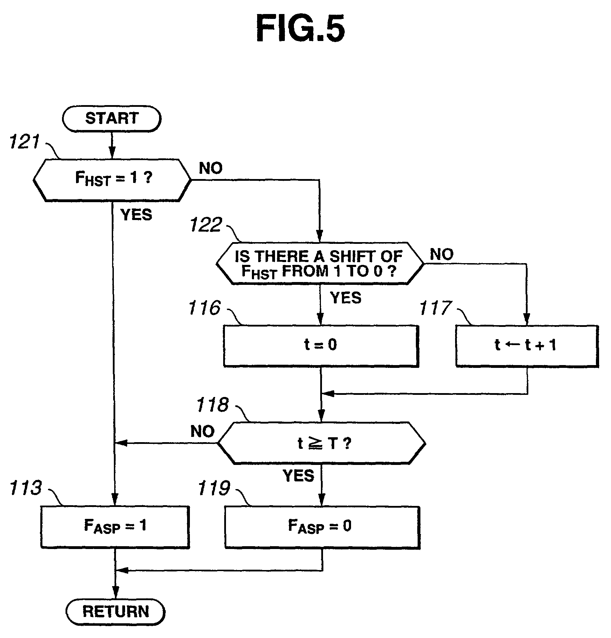

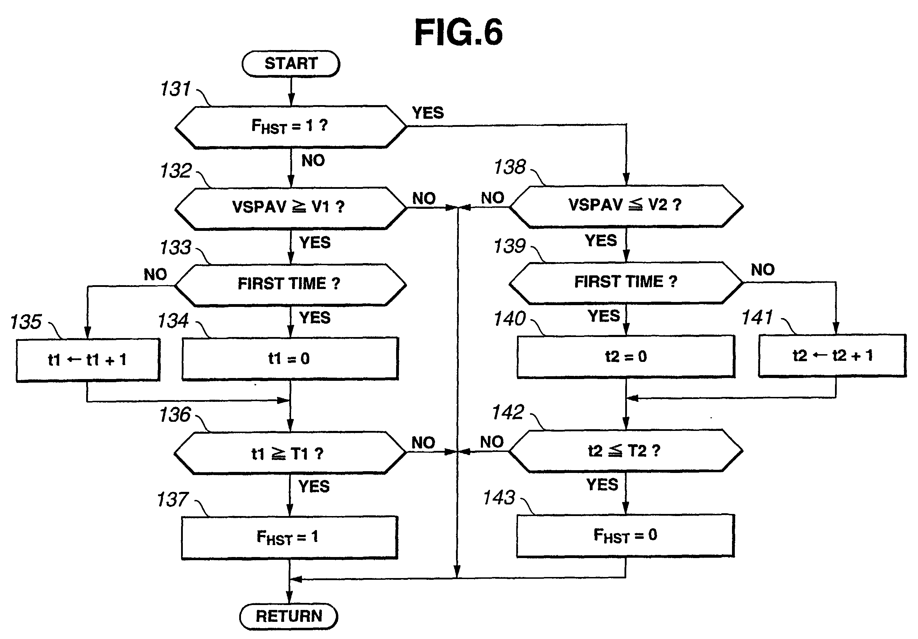

Referring to Figures 5 and 6, description on a second preferred implementation of the present invention is made. This second implementation is substantially the same as the first implementation except the use of high speed travelling flag F_{HST} in stead of the highway flag F_{HW} in determining the automatic stop prohibit flag F_{ASP}. The flow chart of Figure 5 illustrates a control routine implementing the present invention. The CPU executes this control routine at regular intervals, for example, 10 milliseconds, to determine the automatic stop prohibit flag F_{ASP}. The flow chart of Figure 6 illustrates a control routine implementing the present invention. The CPU executes this control routine at regular intervals, for example, 10 milliseconds, to determine the high speed travelling flag F_{HST}. Accordingly, the second preferred implementation is different from the first preferred implementation in that the control routines of Figures 5 and 6 have replaced the control routine of Figure 4.

The same reference numerals are used throughout Figures 4 and 5 to designate like steps to facilitate understanding of similarity between them.

In Figure 5, at step 121, the CPU determines whether or not the high speed travelling flag F_{HST} is set (F_{HST} = 1). If this is the case, the routine proceeds to step 113. At step 113, the CPU sets an automatic stop prohibit flag F_{ASP}. If, at step 121, the flag F_{HST} is reset (F_{HST} = 0), the routine proceeds to step 122. At step 122, the CPU determines whether or not there is a shift of the flag F_{HST} from 1 to 0 by comparing the current 0 level of the flag F_{HST} with the previous level thereof. If this is the case, the routine proceeds to step 116. At step 116, the CPU sets a timer t ready for action (t = 0). If, at step 122, the current 0 level of the flag F_{HST} is equal to the previous level thereof, the routine proceeds to step 117. At step 117, the CPU performs increment of the timer t by one.

After step 116 or 117, the routine proceeds to step 118. At step 118, the CPU determines whether or not the timer t is greater than a predetermined value T. In this example, the predetermined value represents 1 minute. If, at step 118, t < T, the routine proceeds to step 113. At step 113, the CPU sets the automatic stop prohibit flag F_{ASP} (F_{ASP} = 1).

If, at step 118, t ≧ T, the routine proceeds to step 119 where the CPU resets the automatic stop prohibit flag F_{ASP} (F_{ASP} = 0).

The flow chart of Figure 6 illustrates how to determine the high speed travelling flag F_{HST}.

According to the first preferred implementation, the estimation that a vehicle is or has been travelling at high speeds was made on assumption that if it is on a highway, a vehicle travels at high speeds. Accordingly, the first preferred implementation has used the navigation unit 27 as a source of information on vehicle current position within a map. According to the second preferred implementation, the estimation is made on information derived from vehicle speed sensor 18 (see Figure 1). Thus, the second preferred implementation does not require a navigation system and finds its application to vehicles that are not equipped with any navigation systems.

In Figure 6, at step 131, the CPU determines whether or not the high speed travelling flag F_{HST} is set (F_{HST} = 1). If, at step 131, F_{HST} = 0, the routine proceeds to step 132 and onwards. At step 132, the CPU determines whether or not an average vehicle speed VSPAV is greater than or equal to a first predetermined vehicle speed value V1 (VSPAV ≧ V1). The first predetermined vehicle speed value V1 represents a vehicle speed, for example, 80 km/h, which is to be exceeded when vehicle travels at high speeds. If, at step 132, VSPAV < V1, the routine comes to an end point, thus leaving the flag F_{HST} as it is (F_{HST} = 0).

If, at step 132, the CPU determines that VSPAV ≧ V1, this is the case when vehicle is travelling at high speeds and the routine proceeds to step 133. At step 133, the CPU determines whether or not the current determination at step 132 that VSPAV ≧ V1 is the first time by comparing the current determination at step 132 with the previous determination at step 132. If, at step 133, the current determination is the first time, the routine proceeds to step 134. At step 134, the CPU sets a first timer t1 ready for action (t1 = 0). If, at step 133, the current determination is not the first time and thus the second time and onwards, the routine proceeds to step 135. At step 135, the CPU performs increment of the first timer t1 by one.

After step 134 or 135, the routine proceeds to step 136. At step 136, the CPU determines whether or not the first timer t1 is greater than or equal to a predetermined value T1 (t1 ≧ T1). The predetermined value T1 represents a period of time, for example, 5 minutes, which is considered to be sufficiently long after the moment when the determination that VSPAV ≧ V1 was made at the first time to determine that vehicle is travelling at high speeds. If, at step 136, t1 ≧ T1, the routine proceeds to step 137 because this is the case when vehicle is travelling at high speeds. At step 137, the CPU sets the high speed travelling flag F_{HST} (F_{HST} = 1).

If, at step 136, t1 < T1, the routine proceeds to the end point, leaving flag F_{HST} as it is (F_{HST} = 0). This means that the high speed travelling flag F_{HST} stays at the level of 0 as long as t1 is shorter than T1 after the moment when the determination that VSPAV ≧ V1 was made at the first time.

If, at step 131, F_{HST} = 1, the routine proceeds to step 138 and onwards. At step 138, the CPU determines whether or not average vehicle speed VSPAV is less than or equal to a second predetermined vehicle speed value V2 (VSPAV ≦ V2). The second predetermined vehicle speed value V2 represents a vehicle speed, for example, 60 km/h, which travelling speed drops down to or below when vehicle ceases travelling at high speeds. If, at step 138, VSPAV > V2, the routine comes to an end point, thus leaving the flag F_{HST} as it is (F_{HST} = 1).

If, at step 138, the CPU determines that VSPAV ≦ V2, this is the case when vehicle ceases travelling at high speeds and the routine proceeds to step 139. At step 139, the CPU determines whether or not the current determination at step 138 that VSPAV ≦ V2 is the first time by comparing the current determination at step 138 with the previous determination at step 138. If, at step 139, the current determination is the first time, the routine proceeds to step 140. At step 140, the CPU sets a second timer t2 ready for action (t2 = 0). If, at step 139, the current determination is not the first time and thus the second time and onwards, the routine proceeds to step 141. At step 141, the CPU performs increment of the second timer t2 by one.

After step 140 or 141, the routine proceeds to step 142. At step 142, the CPU determines whether or not the second timer t2 is greater than or equal to a predetermined value T2 (t2 ≧ T2). The predetermined value T2 represents a period of time, for example, 1 minute, which is considered to be sufficiently long after the moment when the determination that VSPAV ≦ V2 was made at the first time to determine that vehicle is not travelling at high speeds. If, at step 142, t2 ≧ T2, the routine proceeds to step 143 because this is the case when vehicle is not travelling at high speeds. At step 143, the CPU resets the high speed travelling flag F_{HST} (F_{HST} = 0).

If, at step 142, t2 < T2, the routine proceeds to the end point, leaving flag F_{HST} as it is (F_{HST} = 1). This means that the high speed travelling flag F_{HST} stays at the level of 1 as long as t2 is shorter than T2 after the moment when the determination that VSPAV ≦ V2 was made at the first time.

The average vehicle speed VSPAV can be given by calculating weighted average or simple average of vehicle speed VSP indicated by the vehicle speed signal generated by the vehicle speed sensor 18.

Let us now assume that the vehicle keeps on travelling at high speeds higher than the predetermined value V1 for a period of time longer than the first predetermined value T1 and thus the high speed travelling flag F_{HST} is equal to 1 (F_{HST} = 1). Under this condition, if a brake pedal is applied to decelerate the vehicle to a halt, the average vehicle speed VSPAV drops to V1, V2 and finally to 0 (km/h). The high speed travelling flag F_{HST} changes as follows:
(1) If V1 > VSPAV >V2, then F_{HST} = 1.
(2) If time elapsed from the moment VAPAV ≦ V2 is less than T2, then F_{HST} = 1.
(3) If the elapsed time the moment VAPAV ≦ V2 is greater than T2, then F_{HST} = 0.

If the elapsed time from the moment when VSPAV ≦ V2 was first determined is less than (T2 + T), the automatic stop prohibit flag F_{ASP} stays at 1 level. Thus, the automatic engine stop is prohibited.

In the preferred implementations, T represented 1 minute, T1 represented 5 minutes, V1 represented 80 km/h, T2 represented 1 minute, and V2 represented 60 km/h. These predetermined values are subject to variations in accordance with types of engine and type of vehicle. Appropriate values to such predetermined values can be determined by matching.

In the first preferred implementation, the present invention is implemented with such navigation with equipped with GPS antenna. The present invention may be implemented with other types of navigation systems, for example, a navigation system utilizing road tragic information beacon.

The present invention may be applicable with an internal combustion engine equipped with an engine driven supercharger.

## Claims

1. An automatic engine stop and restart system for a vehicle having an engine (1) having an engine coolant pump driven by the engine, comprising:
- sensors generating signals (9, 11, 15, 17, 18); and
- a controller (10) responsive to said signals for controlling an automatic engine stop and restart when the vehicle has come to a halt and for prohibiting automatic engine stop if circumstances require, **characterized in that**
- said controller (10) being operative to determine whether or not the vehicle has come to a halt after travelling at high speeds and to prohibit automatic engine stop of the engine upon determination that the vehicle has come to a halt after travelling at high speeds.

2. The automatic engine stop and restart system as claimed in claim 1, wherein said controller (10) is operative to determine that a high speed travelling state is accomplished immediately after a state where a vehicle speed is greater than or equal to a predetermined value has continued for a first predetermined period of time, wherein said controller (10) is operative to determine that the high speed traveling state is maintained when a state where the vehicle speed is less than a second predetermined value that is less than said first predetermined value fails to continue for a second predetermined period of time if the high speed travelling state was accomplished, wherein said controller is operative to determine that the high speed travelling state is not accomplished when a state where the vehicle speed is greater than or equal to said first predetermined value fails to continue for said predetermined period of time if the high speed travelling state was not accomplished, wherein said controller (10) is operative to determine that the high speed travelling state was not accomplished immediately after a state where the vehicle speed is less than said second predetermined value has continued for said second predetermined period of time, and wherein said controller (10) determines whether or not the vehicle has come to a halt after travelling at high speeds based on whether or not the high speed travelling state is accomplished.

3. The automatic engine stop and restart system as claimed in claim 2, wherein the vehicle speed is the average vehicle speed.

4. The automatic engine stop and restart system as claimed in claim 1, wherein
- said controller being operative to determine whether or not the vehicle is on a highway,
- said controller being operative to prohibit automatic engine stop of the engine when the vehicle has come to a halt upon determination that the vehicle is on the highway.

5. The automatic engine stop and restart system as claimed in claim 4, further comprising a navigation system, including a map database, for generating a current position of the vehicle within said map database, and wherein said controller determines based on said current position of the vehicle whether or not the vehicle is on the highway.

6. The automatic engine stop and restart system as claimed in claim 1, wherein
- said controller being operative to determine whether or not the vehicle has just left a highway,
- said controller being operative to prohibit automatic engine stop of the engine when the vehicle has come to a halt upon determination that the vehicle has left the highway.

7. The automatic engine stop and restart system as claimed in claim 6, further comprising a navigation system, including a map database, for generating a current position of the vehicle within said map database, and wherein said controller determines based on said current position of the vehicle whether or not the vehicle has just left the highway.

## Patentansprüche

1. Automatische Motor-Stop-und-Wiederstart-Vorrichtung für ein Fahrzeug mit einem Motor (1) mit einer Motorkühlpumpe, die von dem Motor angetrieben wird, umfassend:
Sensoren (9, 11, 15, 17, 18) zur Erzeugung von Signalen; und
eine Steuerung (10), die auf diese Signale reagiert, zum Steuern eines automatischen Stoppens und Wiederstartens des Motors, wenn das Fahrzeug angehalten hat, und zum Verhindern eines automatischen Motorstopps, wenn die Umstände dies erfordern, **dadurch gekennzeichnet, dass**
die Steuerung (10) dazu dient festzustellen, ob das Fahrzeug angehalten hat oder nicht, nachdem es mit hoher Geschwindigkeit gefahren ist, und zum Verhindern eines automatischen Motorstopps des Motors bei Feststellung, dass das Fahrzeug angehalten hat, nachdem es mit hoher Geschwindigkeit gefahren ist.

2. Automatische Motor-Stop-und-Wiederstart-Vorrichtung nach Anspruch 1, wobei die Steuerung (10) dazu dient festzustellen, dass ein Hochgeschwindigkeits-Fahrzustand erreicht wird unmittelbar nach einem Zustand, bei dem eine Fahrzeuggeschwindigkeit größer oder gleich einem vorbestimmten Wert für eine erste vorbestimmte Zeitdauer angedauert hat, wobei die Steuerung (10) dazu dient festzustellen, dass der Hochgeschwindigkeits-Fahrzustand beibehalten wird, wenn ein Zustand, bei dem die Fahrzeuggeschwindigkeit geringer als ein zweiter vorbestimmter Wert, der kleiner ist als der erste vorbestimmte Wert, ist, nicht über eine zweite vorbestimmte Zeitdauer anhält, wenn der Hochgeschwindigkeits-Fahrzustand erreicht wurde, wobei die Steuerung (10) dazu dient festzustellen, dass der Hochgeschwindigkeits-Fahrzustand nicht erreicht wird, wenn ein Zustand, bei dem die Fahrzeuggeschwindigkeit größer oder gleich dem ersten vorbestimmten Wert ist, nicht für die vorbestimmte Zeitdauer anhält, wenn der Hochgeschwindigkeits-Fahrzustand nicht erreicht wurde, wobei die Steuerung (10) dazu dient festzustellen, dass der Hochgeschwindigkeits-Fahrzustand nicht erreicht wurde unmittelbar nachdem ein Zustand, bei dem die Fahrzeuggeschwindigkeit geringer ist als der zweite vorbestimmte Wert, für die zweite vorbestimmte Zeitdauer angedauert hat, und wobei die Steuerung (10) feststellt, ob das Fahrzeug angehalten hat oder nicht, nachdem es mit hoher Geschwindigkeit gefahren ist, auf der Grundlage, ob der Hochgeschwindigkeits-Fahrzustand erreicht wurde oder nicht.

3. Automatische Motor-Stop-und-Wiederstart-Vorrichtung nach Anspruch 2, wobei die Fahrzeuggeschwindigkeit die durchschnittliche Fahrzeuggeschwindigkeit ist.

4. Automatische Motor-Stop-und-Wiederstart-Vorrichtung nach Anspruch 1, wobei
- die Steuerung dazu dient festzustellen, ob sich das Fahrzeug auf einer Autobahn befindet oder nicht,
- die Steuerung dazu dient zu verhindern, dass der Motor automatisch gestoppt wird, wenn das Fahrzeug angehalten hat, wenn festgestellt wird, dass das Fahrzeug sich auf der Autobahn befindet.

5. Automatische Motor-Stop-und-Wiederstart-Vorrichtung nach Anspruch 4, ferner umfassend ein Navigationssystem mit einer Kartendatenbank zum Erzeugen einer aktuellen Position des Fahrzeugs innerhalb der Kartendatenbank, und wobei die Steuerung auf Grundlage der aktuellen Position des Fahrzeugs feststellt, ob sich das Fahrzeug auf der Autobahn befindet oder nicht.

6. Automatische Motor-Stop-und-Wiederstart-Vorrichtung nach Anspruch 1, wobei
- die Steuerung dazu dient festzustellen, ob das Fahrzeug eine Autobahn gerade verlassen hat oder nicht,
- die Steuerung dazu dient zu verhindern, dass der Motor automatisch gestoppt wird, wenn das Fahrzeug angehalten hat, wenn festgestellt wird, dass das Fahrzeug die Autobahn verlassen hat.

7. Automatische Motor-Stop-und-Wiederstart-Vorrichtung nach Anspruch 6, ferner umfassend ein Navigationssystem mit einer Kartendatenbank zum Erzeugen einer aktuellen Position des Fahrzeugs innerhalb der Kartendatenbank, und wobei die Steuerung auf Grundlage der aktuellen Position des Fahrzeugs feststellt, ob das Fahrzeug gerade die Autobahn verlassen hat oder nicht.

## Revendications

1. Dispositif d'arrêt et de redémarrage automatique du moteur pour un véhicule comportant un moteur (1) comportant une pompe de refroidissement du moteur entraînée par le moteur; comprenant :
- des capteurs générant des signaux (9, 11, 15, 17, 18) ; et
- un contrôleur (10) sensible auxdits signaux pour commander un arrêt et un redémarrage automatique du moteur lorsque le véhicule est venu à s'arrêter et pour interdire l'arrêt automatique du moteur si les circonstances l'exigent, **caractérisé en ce que**
- ledit contrôleur (10) est fonctionnel pour déterminer si oui ou non le véhicule est venu à s'arrêter après un déplacement à des vitesses élevées et pour interdire l'arrêt automatique du moteur lorsqu'il a été déterminé que le véhicule était venu à s'arrêter après un déplacement à des vitesses élevées.

2. Dispositif d'arrêt et de redémarrage automatique du moteur selon la revendication 1, dans lequel ledit contrôleur (10) est fonctionnel pour déterminer qu'un état de déplacement à vitesse élevée est accompli immédiatement après un état où une vitesse du véhicule est supérieure à ou égale à une valeur prédéterminée s'est poursuivi pendant une première durée prédéterminée, dans lequel ledit contrôleur (10) est fonctionnel pour déterminer que l'état du déplacement à vitesse élevée est maintenu lorsqu'un état où la vitesse du véhicule est inférieure à une seconde valeur prédéterminée qui est inférieure à ladite première valeur prédéterminée ne peut pas se poursuivre pendant une seconde durée prédéterminée si l'état du déplacement à vitesse élevée à été accompli, dans lequel ledit contrôleur est fonctionnel pour déterminer que l'état de déplacement à vitesse élevée n'est pas accompli lorsqu'un état où la vitesse du véhicule est supérieure à ou égale à ladite première valeur prédéterminée ne peut pas se poursuivre pendant ladite durée prédéterminée si l'état de déplacement à vitesse élevée n'a pas été accompli, dans lequel ledit contrôleur (10) est fonctionnel pour déterminer que l'état de déplacement à vitesse élevée n'a pas été accompli immédiatement après qu'un état où la vitesse du véhicule est inférieure à ladite seconde valeur prédéterminée s'est poursuivi pendant ladite seconde durée prédéterminée, et dans lequel ledit contrôleur (10) détermine si oui ou non le véhicule est venu à s'arrêter après le déplacement à des vitesses élevées sur la base du fait que oui ou non l'état de déplacement à vitesse élevée est accompli.

3. Dispositif d'arrêt et de redémarrage automatique du moteur selon la revendication 2, dans lequel la vitesse du véhicule est la vitesse moyenne de véhicule.

4. Dispositif d'arrêt et de redémarrage automatique du moteur selon la revendication 1, dans lequel
- ledit contrôleur est fonctionnel pour déterminer si oui ou non le véhicule se trouve sur une autoroute,
- ledit contrôleur est fonctionnel pour interdire l'arrêt automatique du moteur lorsque le véhicule est venu à s'arrêter lorsqu'il a été déterminé que le véhicule se trouvait sur l'autoroute.

5. Dispositif d'arrêt et de redémarrage automatique du moteur selon la revendication 4, comprenant en outre, un système de navigation, comportant une base de données cartographiques, pour générer une position actuelle du véhicule à l'intérieur de ladite la base de données cartographiques, et dans lequel ledit contrôleur détermine sur la base de ladite position actuelle du véhicule si oui ou non le véhicule se trouve sur l'autoroute.

6. Dispositif d'arrêt et de redémarrage automatique du moteur selon la revendication 1, dans lequel
- ledit contrôleur est fonctionnel pour déterminer si oui ou non le véhicule vient juste de quitter une autoroute,
- ledit contrôleur est fonctionnel pour interdire l'arrêt automatique du moteur lorsque le véhicule vient juste de s'arrêter lorsqu'il a été déterminé que le véhicule avait quitté l'autoroute.

7. Dispositif d'arrêt et de redémarrage automatique du moteur selon la revendication 6, comprenant en outre un système de navigation, comportant une base de données cartographiques, pour générer une position actuelle du véhicule à l'intérieur de ladite base de données cartographiques, et dans lequel ledit contrôleur détermine sur la base de ladite position actuelle du véhicule si oui ou non le véhicule vient juste de quitter l'autoroute.
